Europäisches Patentamt

European Patent Office

Office européen des brevets

(19)

(11) Veröffentlichungsnummer : **0 125 435**
**B1**

(12) **EUROPÄISCHE PATENTSCHRIFT**

(45) Veröffentlichungstag der Patentschrift :
26.04.89

(21) Anmeldenummer : 84103078.6

(22) Anmeldetag : 21.03.84

(51) Int. Cl.⁴ : **C 22 B   1/00**

(54) Verfahren und Anlage zur Aufbereitung von mit einer Oberflächenbeschichtung versehenen Metallteilen und zur Erzielung von Kugelform aufweisenden Metallteilchen.

(30) Priorität : 16.04.83 DE 3313872

(43) Veröffentlichungstag der Anmeldung :
21.11.84 Patentblatt 84/47

(45) Bekanntmachung des Hinweises auf die Patenterteilung : 26.04.89 Patentblatt 89/17

(84) Benannte Vertragsstaaten :
AT BE CH DE FR GB IT LI NL SE

(56) Entgegenhaltungen :
DE-A- 1 533 143
DE-A- 1 924 640
GB-A- 2 084 055
US-A- 3 905 556
US-A- 4 119 453

(73) Patentinhaber : **Metallwarenfabrik Stockach GmbH**
**D-7768 Stockach 1 (DE)**

(72) Erfinder : **Duus, Günter**
**Up de Bookholt 4**
**D-4426 Vreden (DE)**

(74) Vertreter : **Habbel, Hans-Georg, Dipl.-Ing.**
**Postfach 3429 Am Kanonengraben 11**
**D-4400 Münster (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf ein Verfahren zur Aufbereitung von mit einer Oberflächenbeschichtung versehenen Metallteilen.

Metallische Folien, Bänder oder Profile, die mechanisch, chemisch oder elektrochemisch behandelt sind, die bedruckt, lackiert, kaschiert oder zu Verbundfolien mit anderen Werkstoffen verarbeitet sind, fallen in großem Umfang als Abfall, Schrott od. dgl. an. Bisher werden derartige Abfälle in Umschmelzwerken eingeschmolzen. Solche Verfahren arbeiten mit Trommelöfen oder Wannenöfen, in denen zum Teil die zu behandelnden Abfälle und Schrottmaterialien unter einer Salzdecke bearbeitet werden. Hierbei werden die nichtmetallischen Bestandteile verbrannt. Die metallischen Bestandteile sollen in die schmelzflüssige Phase überführt, gereinigt und zu Umschmelzmetallen verarbeitet werden. Diese bekannten Verfahrensweisen haben einerseits einen hohen Metallabbrand, stellen andererseits aber außerdem eine große Umweltbelastung durch Abbrennen der Kunststoffe, wie Plastiküberzüge, Lacke od. dgl., dar und benötigen einen verhältnismäßig hohen Energiebedarf.

Aus der DE-A-19 24 640 ist ein Verfahren zur elektrostatischen Trennung von Metalldrähten von ihrer Isolierung bekannt, bei welcher die bei dem bekannten Verfahren durch Wärmeeinwirkung auftretenden Nachteile vermieden werden. Mit diesem bekannten Verfahren ist aber das Trennen von feinschichtigen Kunststoffbeschichtungen auf Aluminium nicht wirksam.

Die GB-A-20 84 055 beschäftigt sich zwar auch mit der Trennung und Rückgewinnung von Metallteilchen, die mit Plastik behaftet sind, schlägt aber insofern einen grundsätzlich anderen Weg vor, als das Plastik vor der Feinzerkleinerung entfernt wird. Außerdem erfolgt eine Schwerkraftsortierung auf Schwerkraftsortiertischen, wobei gleichzeitig eine magnetische Trennung des Eisens und der verbleibenden Metallteile erfolgen soll. Weiterhin wird bei diesem bekannten Verfahren durch den Einsatz bestimmter Zerkleinerungsvorrichtungen auch eine Erhitzung auf « Rot-Temperatur » zumindest teilweise angestrebt.

Der Erfindung liegt die Aufgabe zugrunde, ein Verfahren zur Aufbereitung von mit einer Oberflächenbeschichtung versehenen Metallteilen zu schaffen, das im wesentlichen mechanisch arbeitet, so daß die bei den bisher bekannten Verfahren auftretenden Nachteile, wie Metallverluste, Umweltbelastung und hoher Energiebedarf, ausgeschaltet werden. Insbesondere liegt der Erfindung die Aufgabe zugrunde, metallische Rohstoffe, z. B. auch aus Haushaltsmüll, zurückzugewinnen.

Diese der Erfindung zugrundeliegende Aufgabe wird durch die Verfahrensmerkmale des Hauptanspruches gelöst.

Vorteilhafte Ausgestaltungen dieses Verfahrens sind in den Ansprüchen 2 und 3 erläutert.

Die Erfindung bezieht sich weiterhin auf eine Anlage zur Aufbereitung von mit einer Oberflächenbeschichtung versehenen Metallteilen gemäß Anspruch 4. Vorteilhafte Ausgestaltungen dieser Anlage sind in den Ansprüchen 5 und 6 erläutert.

Schließlich wird im Anspruch 7 vorgeschlagen, die rückgewonnenen Aluminiumteilchen zur Stahlveredelung einzusetzen.

Durch die neue Arbeitsweise liegt die Rückgewinnungsmenge bei 100 % des eingebrachten Materials und eine Umweltbelastung ist vollkommen ausgeschlossen.

Der einzusetzende Energiebedarf beträgt nur 1/12 gegenüber dem Energiebedarf gemäß dem Stand der Technik und es ist zum ersten Mal möglich, auch aus sortierten Haushaltsabfällen die vorhandenen Metallteile ohne Schwierigkeiten rückzugewinnen.

Die vorgeschlagenen Mikro-Wirbel-Mühlen arbeiten derart, daß das zu vermahlene Gut Rotormühlen zugeführt wird. Die als Mahlmedium dienende Luft wird durch ein Luftsammelrohr angesaugt und transportiert das Produkt von unten nach oben durch die eigentlichen Mahlzonen. Rotierende Mahlplatten erzeugen dabei Mikro-Wirbel, in denen der eigentliche Zerkleinerungsvorgang abläuft. Wesentliches Kennzeichen solcher Mikro-Wirbel-Mühlen ist darin zu sehen, daß die Luft als Mahlmedium benutzt wird, wobei in den durch die Konstruktion und Luftführung hervorgerufenen Mikro-Wirbeln der eigentliche Mahlvorgang abläuft. Nur ein kleiner Teil des Produktes kommt mit den rotierenden oder feststehenden Maschinenteilen in Berührung.

Die sehr gute Zerkleinerungswirkung der Mikro-Wirbel-Mühlen beruht auf einem sehr hohen Luftdurchsatz. Durch die sowohl rotierenden als auch feststehenden Einbauten und eine geeignete Luftführung wird die Mahlluft in eine extreme Turbulenz versetzt. Eine Vielzahl von Mikro-Wirbeln bildet sich in der eigentlichen Mahlzone, und innerhalb dieser Mikro-Wirbel wird sowohl die Richtung als auch die Geschwindigkeit der einzelnen Partikel in extrem kurzen Zeitabständen geändert. Hierdurch erfolgen gegenseitige Stöße der Partikel, die zur schonenden Zerkleinerung führen. Durch den hohen Luftdurchsatz wird die bei der Prallzerkleinerung entstehende örtlich begrenzte Wärme durch das Mahlmedium « Luft » sofort abgeführt. Unabhängig von der Zerkleinerung erfolgt gleichzeitig eine Umformung der Partikel in kleine runde Körper. Der metallische Anteil der den Mühlen aufgegebenen Rohmenge verformt sich dabei plastisch zu einer nicht reversiblen Kugelform, während anhaftende Bestandteile, wie Kunststoff, Fasern od. dgl., teils spröden, fasrigen oder elastischen Charakter haben und nach Beendigung der Feinzerkleinerung in nadeliger, fasriger oder plättchenförmiger Form anfallen, die sich z. B. in Kaskadensichtern leicht von den kugeligen metallischen Teilen trennen lassen.

Die plastisch zu einer nicht reversiblen Kugelform umgeformten Metallteilchen sind ebenfalls neu. So ist beispielsweise der Einsatz von Aluminium in Form von Granulaten oder Aluminiumpulver als Zusatz in der Stahlindustrie bekannt.

Die Granulate weisen dabei eine Granulatgröße ab etwa 2 mm auf, haben eine Tropfenform und keine Kugelform und sind daher nur sehr schwer zu verarbeiten. Der bei der Bildung der Tropfenform entstehende Grat führt zu erheblichen Verschleißerscheinungen in den entsprechenden Fördereinrichtungen.

Das Aluminiumpulver weist eine Korngröße von 0,4 bis 0,5 mm auf und ist damit ebenfalls nicht besonders gut für den Einsatz in der Stahlindustrie geeignet, da es sich nicht gut in die Stahlschmelze einmischen läßt.

Wird aber die Grobfraktion einer Feinzerkleinerung zugeführt, die in Mikro-Wirbel-Mühlen erfolgt, wird hierdurch eine Kugelform erzielt in der Größe von 0,1 bis 2,0 mm. Diese Metallteilchen sind rieselfähig, können in Förderleitungen problemlos gefördert werden und können den Metallschmelzen in einfachster Weise zugemischt werden.

Bei der Behandlung von mit Thermoplasten od. dgl. versehenen Metallen ist eine weitere Kühlung der Feinzerkleinerungseinrichtungen sinnvoll, um derart ein Schmieren und Anbacken der thermoplastischen Anteile zu verringern. Die Feinzerkleinerung soll vorzugsweise bei einer Temperatur von unter 100 °C durchgeführt werden.

Die bei der Feinzerkleinerung entstehende Nichtmetallfraktion aus nadeligem, faserigen oder plättchenförmigem Geröll wird agglomeriert und diese Produkte werden dann für minderwertige Kunststoffprodukte eingesetzt. Die Metallfraktion fällt in einer Reinheit von ca 95 % an und kann in der anfallenden Form industriell weiterverarbeitet werden.

Ein Ausführungsbeispiel wird nachfolgend anhand der Zeichnungen erläutert. Die Zeichnungen zeigen dabei in den

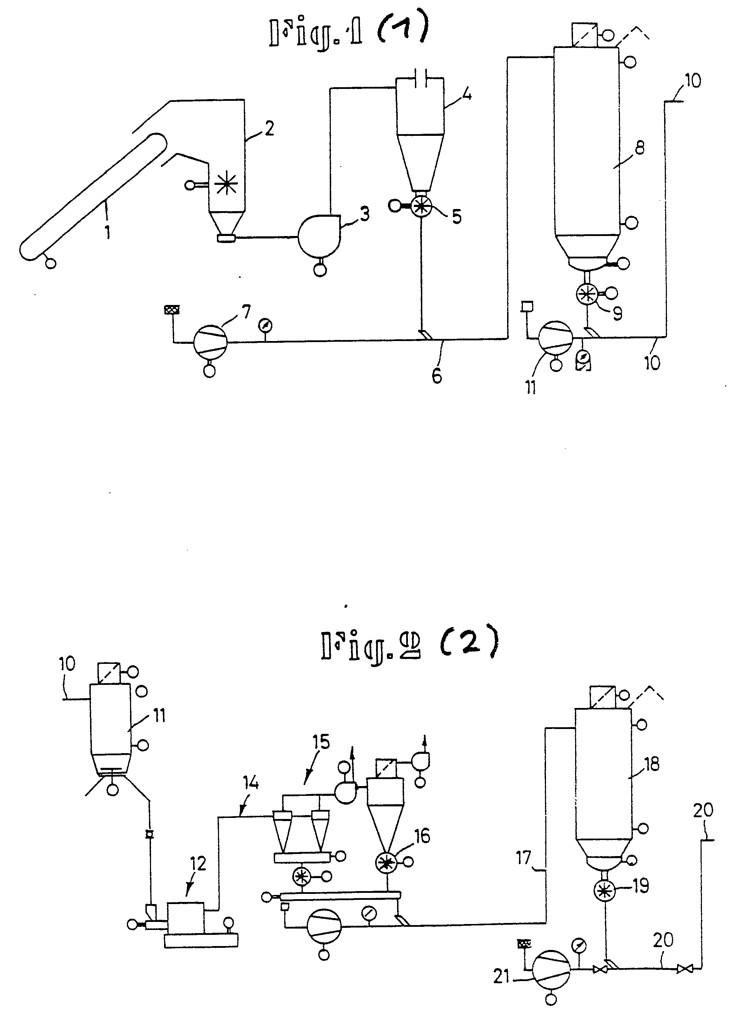

Fig. 1 eine Aufbereitungsanlage unter Bebis 5 nutzung der erfindungsgemäßen Verfahrensweise.

In Fig. 1 ist mit 1 eine Zuförderanlage bezeichnet, beispielsweise ein Förderband, mit der die aufzubereitenden Metallteile, die als Folien, Bänder oder Profile ausgebildet sein können und eine Oberflächenbeschichtung aufweisen, zugefördert werden. Aufgabe der Aufbereitungsanlage ist, die Oberflächenbeschichtung von dem metallischen Teil zu trennen. Von der Förderanlage gelangt das Rohgut in eine Schneidmühle 2, in der eine Grobzerkleinerung des Rohgutes auf eine Korngröße zwischen 1 und 20 mm erfolgt. Von dieser Schneidmühle wird über ein Fördergebläse 3 das grobzerkleinerte Rohgut einem Zentrifugalsichter 4 aufgegeben, in welchem die Feststoffteile von der Luft, die zwangsläufig aufgrund der Förderung zugegeben wurde, getrennt werden und unter Zwischenschaltung einer Zellenradschleuse 5 wieder in eine Förderleitung 6 aufgegeben werden, die mit einem Fördergebläse 7 ausgerüstet ist. Von hier gelangt die Grobfraktion in einen Speichersilo 8 und kann von hier aus unter Zwischenschaltung einer Zellenradschleuse 9 der Weiterverarbeitung zugeführt werden.

An die Zellenradschleuse 9 schließt sich eine Förderleitung 10 mit einem Fördergebläse 11 an, das die Grobfraktion über die Förderleitung 10 einem Speichersilo 13 zuführt (Fig. 2), von welchem aus das grob zerkleinerte aufzubereitende Gut einer oder mehrerer Mikro-Wirbel-Mühlen 12 zugeführt wird, wobei in der Zeichnung nur eine Mikro-Wirbel-Mühle 12 aus übersichtlichkeitsgründen dargestellt ist. Aus der Mikro-Wirbel-Mühle 12 gelangt das fein zerkleinerte Gut über eine Förderleitung 14 zu einem Zentrifugalsichter 15 und von diesem wiederum unter Zwischenschaltung von Zellenradschleusen 16 in eine Förderleitung 17, die das sogenannte Feingut in einen Speichersilo 18 fördert.

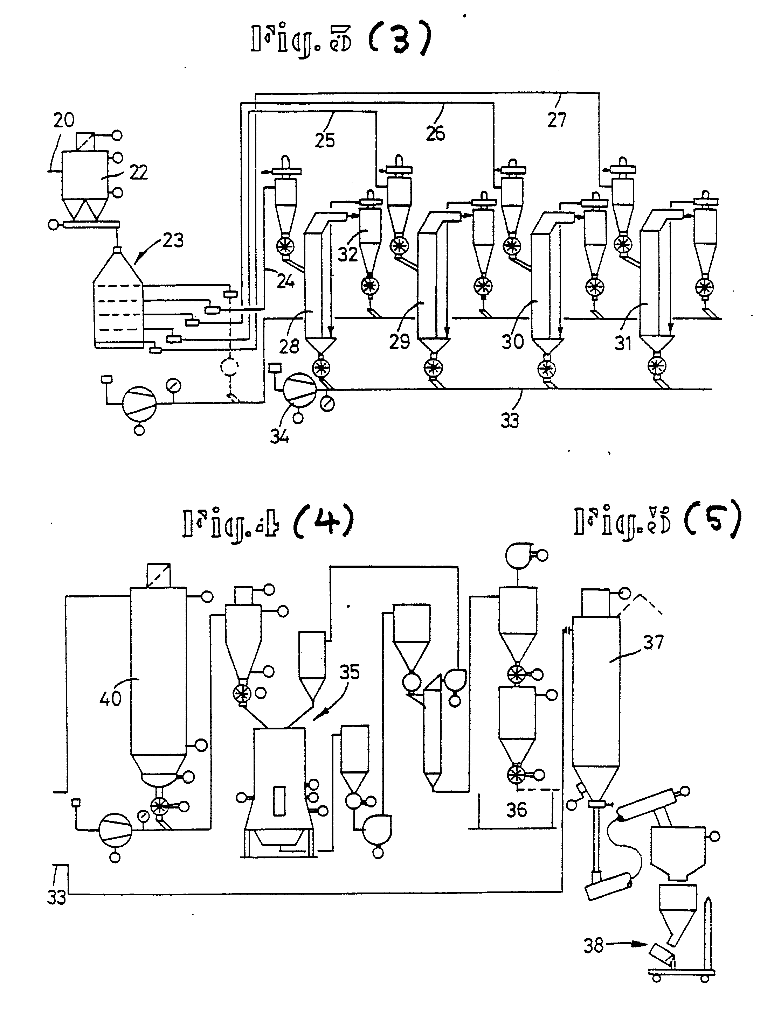

Dieses Feingut kann — unter Zwischenschaltung einer Zellenradschleuse 19 — über eine Förderleitung 20, die von einem Fördergebläse 21 betrieben wird, abgezogen werden und gelangt (Fig. 3) in einen Speichersilo 22, von dem aus die sogenannte Feinfraktion in unterschiedliche Siebfraktionen dadurch getrennt werden kann, daß die Feinfraktion einer Taumelsiebanordnung 23 zugeführt wird, in der mehrere übereinandergeschaltete Siebe die Trennung in die unterschiedlichen Siebfraktionen herbeiführt. Diese so erzielten unterschiedlichen Siebfraktionen werden, wie dies durch die einzelnen Förderleitungen 24, 25, 26 und 27 verdeutlicht ist, jeweils einem Zentrifugalsichter zugeführt, von dem aus nunmehr das Metall-Nichtmetallgemisch je einem Kaskadensichter 28 bzw. 29, 30 oder 31 zugeführt wird. Der Kaskadensichter, z. B. 28, trennt die metallische von der nichtmetallischen Fraktion, wobei die nichtmetallische Fraktion einem Zentrifugalsichter 32 aufgegeben wird, während die Metallfraktion aus dem Kaskadensichter 28 abgezogen und in eine Förderleitung 33 gegeben wird, die mit einem Fördergebläse 34 ausgerüstet ist.

Wie aus Fig. 4 ersichtlich, gelangt die nichtmetallische Fraktion in einen Speichersilo 40 und von diesem zu einem Agglomerator 35 und das so gewonnene Gut wird als Granulat bei 36 abgezogen.

Die über die Förderleitung 33 geförderte Metallfraktion gelangt zu einem Speichersilo 37 bzw. einer Puffersiloanlage und kann von hier — wie bei 38 ersichtlich — abgezogen und weiterverarbeitet werden.

**Patentansprüche**

1. Verfahren zur Aufbereitung von mit einer Oberflächenbeschichtung versehenen Metallteilen, bei welchem die aufzubereitenden Metallteile auf eine Korngröße von 1 mm bis 20 mm zerkleinert werden, diese Grobfraktionen einer Feinzerkleinerung in Mikro-Wirbel-Mühlen zugeführt wird, auf der die Grobfraktionen auf eine Korngröße von etwa 300 μm (Mikrometer) zerkleinert wird, anschließend das Feststoffgemisch aus Metallfraktion und Nichtmetallfraktion in Sichtern in die Metallfraktion und die Nichtmetallfraktion getrennt wird, die Nichtmetallfraktion agglomeriert und die Metallfraktion zur Weiterverarbeitung abgeführt wird.

2. Verfahren nach Anspruch 1, dadurch gekennzeichnet, daß das Mahlgut und/oder die Mühlen bei der Feinzerkleinerung gekühlt werden.

3. Verfahren nach Anspruch 1, dadurch gekennzeichnet, daß die Förderung des zerkleinerten Aufbereitungsgutes in geschlossenen Leitungen durch Fördergebläse erfolgt.

4. Anlage zur Aufbereitung von mit einer Oberflächenbeschichtung versehenen Metallteilen mit einer Grobzerkleinerungsvorrichtung (2), einer Feinzerkleinerungsvorrichtung (12) und Sichtern, z. B. (28), zur Trennung von Metallfraktion und Nichtmetallfraktion, gekennzeichnet durch eine Siebanordnung (23) zwischen der Feinzerkleinerungsvorrichtung (12) und dem Sichter (28), mehrere der Siebanordnung (23) zugeordnete Siebe und jedem Sieb zugeordnete Kaskadensichter (28, 29, 30, 31) sowie zwischen den einzelnen Arbeitsstationen eingeschaltete Speichersilos (8, 13, 18, 22, 37, 40).

5. Anlage nach Anspruch 4, gekennzeichnet durch Zentrifugalsichter (4, 15, 32) zur Erzielung einer Luft-Feststoff-Trennung.

6. Anlage nach Anspruch 4 und 5, dadurch gekennzeichnet, daß zwischen die Förderleitungen, die eingeschalteten Speichersilos (8, 13, 18, 22, 37, 40) bzw. die Zentrifugalsichter (4, 15, 32) Zellenradschleusen (5, 9, 16, 19) eingeschaltet sind.

7. Verwendung von nach dem Verfahren gemäß den Ansprüchen 1 bis 3 erzeugten Aluminiumteilchen für die Stahlveredelung.

## Claims

1. Process for working up metal parts provided with a surface coating, wherein the metal parts to be worked up are comminuted to a particle size of from 1 to 20 millimetres, these coarse fractions are subjected to fine comminution in micro-vortex mills whereby the coarse fractions are comminuted to a particle size of about 300 μm (micrometres), the mixture of solids consisting of a metal fraction and a non-metal fraction is then separated in sifters into the metal fraction and the non-metal fraction, the non-metal fraction is agglomerated and the metal fraction passed on to further processing.

2. Process according to Claim 1, characterized in that during the fine comminution the material being comminuted and/or the mills is or are cooled.

3. Process according to Claim 1, characterized in that the comminuted material being worked up is conveyed in closed pipes by means of conveyor blowers.

4. Installation for working up metal parts provided with a surface coating, comprising a coarse comminution apparatus (2), a fine comminution apparatus (12) and sifters, for example (28), for separating the metal fraction and the non-metal fraction, characterized by a sieve arrangement (23) between the fine comminution apparatus (12) and the sifter (28), a plurality of sieves associated with the sieve arrangement (23) and cascade sifters (28, 29, 30, 31) associated with each sieve, and also storage silos (8, 13, 18, 22, 37, 40) inserted between the individual work stations.

5. Installation according to Claim 4, characterized by centrifugal sifters (4, 15, 32) for effecting the separation of air and solids.

6. Installation according to Claims 4 and 5, characterized in that cellular wheel sluices (5, 9, 16, 19) are inserted between the conveyor pipes, the inserted storage silos (8, 13, 18, 22, 37, 40), and the centrifugal sifters (4, 15, 32) respectively.

7. The use of aluminium particles produced by the process according to Claims 1 to 3 for the refining of steel.

## Revendications

1. Procédé de traitement de matières métalliques enrobées, caractérisé en ce qu'il consiste a concasser les pièces métalliques à traiter jusqu'à une dimension de grain de 1 à 20 mm, à amener la fraction brute ainsi obtenue dans des broyeurs à micro-tourbillons pour y être réduite en fraction fine à environ 300 μm, à séparer le mélange des matières solides dans les séparateurs en fraction métallique et fraction non métallique, à agglomérer la fraction non métallique et à conduire la fraction métallique vers des traitements ultérieurs.

2. Procédé selon la revendication 1, caractérisé en ce que la matière à broyer et/ou les broyeurs sont refroidis pendant le broyage fin.

3. Procédé selon la revendication 1, caractérisé en ce que la matière à traiter est transportée dans des conduites fermées par des souffleries de transport.

4. Installation pour le traitement de matières métalliques enrobées, comprenant un dispositif de concassage brut (2), un dispositif de broyage fin (12) et des séparateurs (28) pour la séparation des fractions métalliques et non métalliques, caractérisée en ce qu'elle comporte également d'une part, un dispositif de tamisage (23) monté entre l'installation de broyage fin (12) et le séparateur (28) et contenant plusieurs tamis et, d'autre part, des séparateurs à cascades (28, 29, 30, 31), correspondant à chaque tamis, ainsi que des silos de stockage installés entre les différentes stations de travail (8, 13, 18, 22, 37, 40).

5. Installation selon la revendication 4, caractérisée en ce qu'elle comporte des séparateurs centrifuges (4, 15, 32), destinés à séparer l'air de la matière solide.

6. Installation selon l'une des revendications 4 et 5, caractérisée en ce qu'elle comporte des alimentateurs à roue cellulaire (5, 9, 16, 19) montés entre les conduites de transport et les silos de stockage (8, 13, 18, 22, 37, 40) ou bien les séparateurs centrifuges (4, 15, 32).

7. Application de l'obtention de particules en aluminium, par le procédé selon l'une des revendications 1 à 3, à la transformation des aciers.

Fig. 1 (1)

Fig. 2 (2)

Fig. 5 (3)

Fig. 4 (4)

Fig. 5 (5)